# EUROPEAN PATENT SPECIFICATION

(11) **EP 1 364 818 B1**
(45) Date of publication and mention of the grant of the patent: **16.02.2005**
(21) Application number: 03010043.2
(22) Date of filing: 02.05.2003
(51) Int. Cl.: B60H 1/00, B60H 1/32, F28F 11/06

(54) **Outflow prevention device**
Ausflussverhinderungsvorrichtung
Dispositif de prévention de fuite

(30) Priority: 20.05.2002 JP 2002144334
(43) Date of publication of application: 26.11.2003
(73) Proprietor: TGK Co., Ltd., Hachioji-shi, Tokyo 193-0942 (JP)
(72) Inventor: Hirota, Hisatoshi, Hachioji-shi, Tokyo 193-0942 (JP); Tsugawa, Tokumi, Hachioji-shi, Tokyo 193-0942 (JP)
(74) Representative: Grünecker, Kinkeldey, Stockmair & Schwanhäusser Anwaltssozietät

(56) References cited:
- EP-B- 0 417 172
- EP-B- 0 923 458
- US-A- 5 271 559

## Description

This invention relates to an outflow prevention device according to the preamble of claim 1 and to a refrigeration cycle according to the preamble of claim 12. The invention particularly relates to an outflow prevention device for preventing a refrigerant within an automotive air conditioner from flowing out into a vehicle compartment.

In automotive air conditioners, in view of global environmental problems, chlorofluorocarbons destroy the ozone layer, causing danger of ultraviolet rays harmful to human health radiating through ozone holes, CFC substitutes as refrigerants are being studied, e.g. carbon dioxide.

A typical refrigeration cycle comprises a compressor, a gas cooler, an expansion device for depressurising the refrigerant delivered from the gas cooler, and an evaporator for evaporating the depressurised refrigerant by heat exchange with air in a vehicle compartment. With carbon dioxide as a refrigerant, at respective locations downstream of the evaporator, there may be arranged an accumulator for storing excess refrigerant, and an internal heat exchanger for cooling the refrigerant cooled by the gas cooler, by refrigerant being sent to the compressor from the accumulator. Only the evaporator is arranged in the vehicle compartment to e.g. cool the inside air. With carbon dioxide as a refrigerant, the system pressure is much higher than in a refrigeration cycle using a CFC-based refrigerant, and hence component parts used therein have to be highly pressure-resistant.

In the evaporator arranged in the vehicle compartment, rupture or outflow can occur despite a highly pressure-resistant design of the evaporator. If carbon dioxide flows out into the vehicle compartment, an oxygen deficiency occurs in the vehicle compartment, which can do harm to passengers.

In a refrigeration cycle as known from EP 0 923 548 B the check valve in the outlet passage of the heat exchanger is associated in a pressurewise interlocked manner with the shut valve arranged in an inlet passage to the heat exchanger by means of a membrane separating the inlet and the outlet passages from each other. As soon as the check valve has reached its blocking position, the pressure at the downstream side of the check valve will decrease, while the pressure in the inlet passage will displace the membrane. The displacement of the membrane is transmitted by an actuating stem to the valve element of the shut valve such that the valve element of the shut valve is brought into its blocking position.

Further prior art is contained in US-A-5,271,559 and EP-A-0 417 172.

It is an object of the invention to provide a structurally simple outflow prevention device which is capable of preventing refrigerant from flowing out excessively into a vehicle compartment in case of a heat exchanger rupture. Another object is to create a structurally simple refrigeration cycle which automatically avoids excessive refrigerant outflow in case of a heat exchanger rupture.

The above objects can be solved with the features of claim 1 and claim 12.

When the heat exchanger or evaporator is broken, the pressure on the upstream side of the check valve becomes lower than that on the downstream side of the same, so that the check valve is closed, and the shut valve is closed in a manner interlocked with the operation of the check valve. Consequently, even if fluid flows out from the heat exchanger due to breakage of the same, the shut valve and the check valve arranged at respective locations upstream and downstream of the heat exchanger are both closed immediately after the breakage, so that it is possible to prevent fluid from continuing to flow out from the heat exchanger.

When the evaporator is broken, the pressure relationship across the check valve is reversed, whereby the check valve is fully closed, and the shut valve is also fully closed therewith in a manner interlocked therewith. This makes it possible to prevent refrigerant (carbon dioxide) from flowing out from the evaporator into the vehicle compartment. Since the shut valve operates in accordance with differential pressure generated spontaneously by a flow of refrigerant through the check valve, it is unnecessary to control the shut valve by an electric signal from the outside. Since the pressure-receiving area of the shut valve in the normal valve closed state and the piston area are set to be equal to each other, the shut valve is allowed to perform opening/closing operations simply depending on differential pressure across the check valve, without being influenced by pressure from the high-pressure side.

Since the piston of the shut valve is formed with the communication passage for communicating between the chambers before and behind the piston, even when the compressor is operated when the evaporator is broken, it is possible to circulate refrigerant in a manner bypassing the evaporator, so that abnormal rise in high pressure can be prevented.

By alternatively constructing the shut valve as a three-way valve, the valve structure can be simplified, which contributes to reduction of manufacturing costs.

Further, by combining the outflow prevention device with the expansion device to form a unitary assembly, it is possible to make the component parts compact in size to thereby improve mountability on a vehicle.

Moreover, by integrally providing a charge valve for charging refrigerant on a downstream side of the shut valve or on an upstream side of the check valve, it is possible to fill the evaporator as well with refrigerant when charging refrigerant.

Embodiments of the invention will be described with reference to the drawings. The drawings comprise:
- FIG. 1: a system diagram of a refrigeration cycle comprising an outflow prevention device of the present invention;
- Fig. 2: is a cross-section view of a first embodiment of an outflow prevention device in a closed state;
- Fig. 3: a cross-section of the first embodiment, in an open state;
- Fig. 4: a cross-section view of a second embodiment of an outflow prevention device in a closed state;
- Fig. 5: a cross-section of the second embodiment, in an open state;
- Fig. 6: a cross-section of a third embodiment of an outflow prevention device, in a closed state;
- Fig. 7: a cross-section of the third embodiment, in an open state;
- Fig. 8: a cross-section view of a fourth embodiment of an outflow prevention device in a closed state; and
- Fig. 9: a system diagram of a refrigeration cycle having a fifth embodiment of an outflow prevention device.

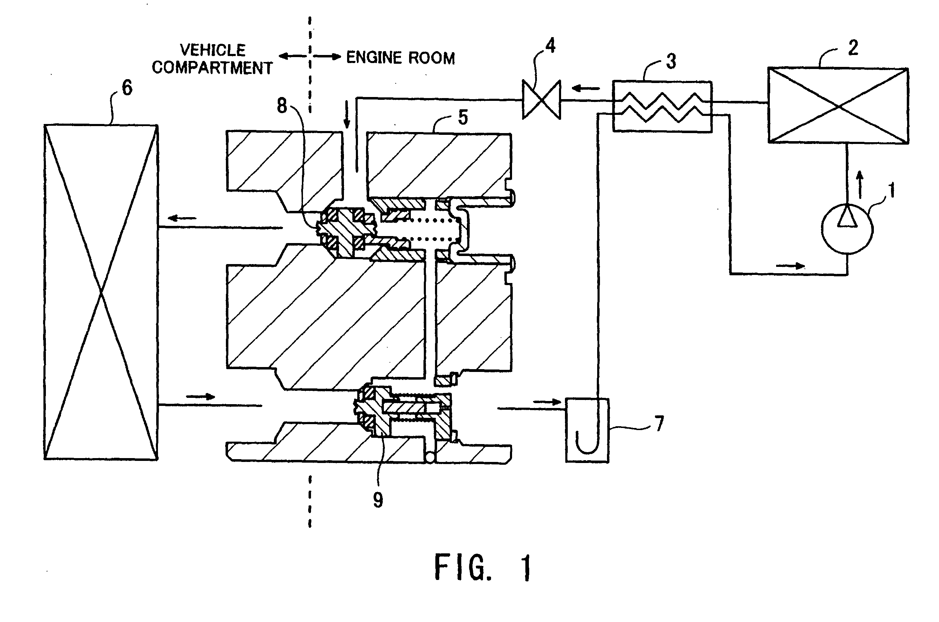

The refrigeration cycle in Fig. 1 comprises a compressor 1 for compressing refrigerant, e.g. carbon dioxide, a gas cooler 2 for cooling the high-temperature and high-pressure refrigerant compressed by the compressor 1, an internal heat exchanger 3, an expansion device 4 for reducing the pressure of the cooled high-temperature and high-pressure refrigerant to change the refrigerant into a low-temperature and low-pressure refrigerant, an outflow prevention device 5 for preventing outflow of refrigerant, an evaporator 6 for evaporating the low-temperature and low-pressure refrigerant, and an accumulator 7 for storing excess refrigerant. The outflow prevention device 5 has a shut valve 8 arranged between the expansion device 4 and the evaporator 6 and a check valve 9 arranged between the evaporator 6 and the accumulator 7 to cause refrigerant to flow only in a direction from the evaporator 6 toward the accumulator 7. The shut valve 8 is opened and closed by utilising differential pressure generated between an inlet and an outlet of the check valve 9 by a flow of refrigerant through the check valve 9. The evaporator 6 is arranged within a vehicle compartment.

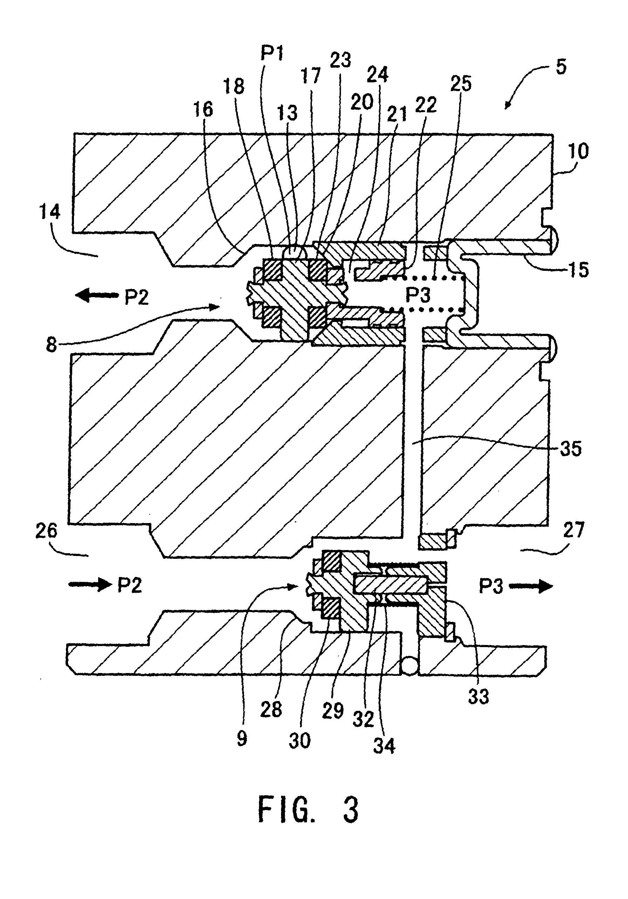

During normal refrigeration, the shut valve 8 and the check valve 9 are open (Fig. 3). The high-temperature and high-pressure refrigerant compressed by the compressor 1 is cooled by the gas cooler 2 and the internal heat exchanger 3, and then is adiabatically expanded by the expansion device 4 into the low-temperature and low-pressure refrigerant supplied to the evaporator 6 via the shut valve 8 of the outflow prevention device 5. The refrigerant supplied to the evaporator 6 is evaporated therein by heat exchange with air in the vehicle compartment, and then flows via the check valve 9 into the accumulator 7 to be separated into gas and liquid. Gaseous refrigerant undergoes heat exchange with refrigerant flowing out from the gas cooler 2, in the internal heat exchanger 3, and returns to the compressor 1.

In the case of an evaporator rupture, the evaporator 6 side of the outflow prevention device 5 becomes open to the atmosphere. Pressure on the evaporator 6 side of the check valve 9 becomes low. The check valve 9 is closed. Simultaneously with this, the shut valve 8 which operates in a manner, e.g. hydraulically, interlocked with the check valve 9 is also closed (Fig. 1). Thus, the refrigerant, e.g. carbon dioxide, is prevented from flowing out from the broken evaporator 6 into the vehicle compartment.

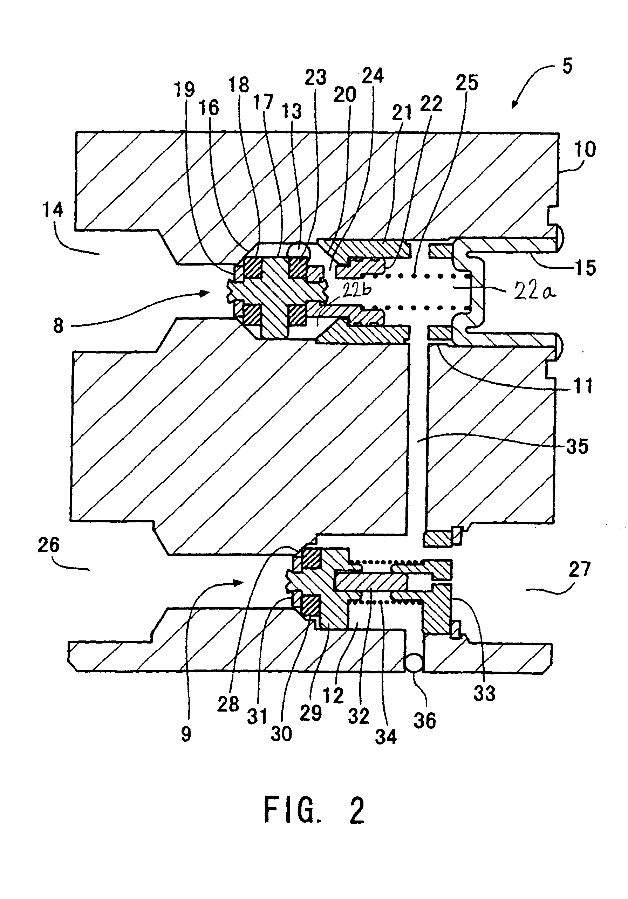

The outflow prevention device 5 of Figs. 2 and 3 has a body 10 formed with an upper and a lower passage 11, 12. The shut valve 8 is arranged in the upper passage 11. The check valve 9 is arranged in the lower passage 12. Into the upper passage 11 opens a shut valve inlet 13 for supply of refrigerant from the expansion device 4. On a left end side of the upper passage 11, a shut valve outlet 14 is formed for connection to a pipe leading to the evaporator 6. A right end of the upper passage 11 is closed by a cap 15.

Between the shut valve inlet 13 and the shut valve outlet 14, a tapered valve seat 16 is integrally formed with the body 10. A plug 17 is axially movably disposed at an upstream side of the valve seat 16. A valve sheet 18 (a valve element) is fixed to one side of the plug 17 opposed to the valve seat 16, via a washer 19 crimped to the plug 17. The valve sheet 18 is made of a pliant material, preferably polytetrafluoroethylene, which ensures an excellent sealing property when the valve sheet 18 is seated on the valve seat 16.

A guide 21 having another valve seat 20 is inserted behind the plug 17 in the upper passage 11. An axially movable piston 22 is arranged in the guide 21 and is fixed to the plug 17, e.g. by crimping. The piston 22 has a central cavity and the same diameter as that of the valve sheet 18. A closed-state pressure-receiving area on which the pressure acts on the valve element when the passage to the evaporator 6 is closed by the shut valve 8 and a piston pressure-receiving area are set to be equal such that the pressure influences are cancelled, enables the shut valve 8 to open and close irrespective of the value of the pressure.

Another valve sheet 23, e.g. of polytetrafluoroethylene, (a second valve element) opposed to the second valve seat 20 is fixed to the plug 17. The piston 22 has a bleed hole 24 in a side face for communicating a chamber 22a behind the piston 22 with a chamber 22b between the valve seats 16, 20, as long as valve sheet 23 is not seated on valve seat 20. Between the piston 22 and the cap 15 a spring 25 is provided for urging the plug 17 and the valve sheet 18 toward the valve seat 16.

The lower passage 12 has at a left end portion a check valve inlet 26 for connection to a pipe leading to the evaporator 6, and at a right end a check valve outlet 27. In an intermediate portion of the lower passage 12, a tapered valve seat 28 is e.g. integrally formed with the body 10. An axially movable plug 29 is disposed at the downstream side of the valve seat 28. A valve sheet 30 (a valve element) is fixed to the plug 29 opposed to the valve seat 28, via a washer 31, e.g. crimped to the plug 29. The valve sheet 30 is made e.g. of polytetrafluoroethylene. A shaft 32 held by a guide 33 guides the plug 29 in an axial direction. Between the plug 29 and the guide 33, a spring 34 is urging the plug 29 in the valve-closing direction. A chamber downstream of the check valve 9 communicates with the chamber 22a behind the piston 22 via a pressure transmitting bypass passage 35. An outside end of a hole of the body 10 is closed by a stopper 36.

When the pressure of refrigerant introduced to the shut valve 8 is P1, the respective pressure on the evaporator 6 side of the shut valve 8 and of the check valve 9 is P2 (assuming that there is no pressure loss in the evaporator 6 at the worst), the pressure at the downstream side of the check valve 9 is P3, a valve-opening differential pressure set point at which the check valve 9 starts to open is ΔPa, and a valve-opening differential pressure set point at which the shut valve 8 starts to open is ΔPb. The check valve 9 is opened when P2 - P3 > ΔPa holds, and the shut valve 8 is also opened when P2 - P3 > ΔPb holds. To ensure that the shut valve 8 positively opens when the check valve 9 is opened, ΔPa is set to be equal to or larger than ΔPb (ΔPa >= ΔPb). The valve-opening differential pressure set points ΔPa, ΔPb are set by respective loads of the springs 34, 35.

Operation of the shut valve 8 is not influenced by the pressure P1 but is opened and closed by the differential pressure P2 - P3 between the pressure P2 on the evaporator 6 side of the shut valve 8 and the pressure P3 within the chamber 22a behind the piston 22 (i.e. the pressure on the downstream side of the check valve 9). The differential pressure P2 - P3 as motive power for moving the shut valve 8 is generated by the check valve 9.

The check valve 9 is urged by the spring 34 in valve-closing direction. When refrigerant is sucked from the evaporator 6 by the compressor 1 into the accumulator 7, the pressure P3 becomes lower than the pressure P2. The differential pressure P2 - P3 is generated across the check valve 9. The pressure P2 on the upstream side of the check valve 9 is equal to the pressure on the downstream side of the shut valve 8. The pressure P3 is applied to the chamber 22a via the bypass passage 35, which means that the same differential pressure P2 - P3 is applied to the shut valve 8, which moves rightward in Fig. 3. Both the shut valve 8 and the check valve 9 are held in the open states.

If the evaporator 6 ruptures during normal operating condition the pressure within the evaporator 6 drops. Although the compressor 1 still continues to suck, a pressure e.g. of approximately 30 bars is applied to the downstream side of the check valve 9. At the upstream side of the check valve 9 pressure is present. The check valve 9 immediately closes, and the shut valve 8 is also closed in a manner interlocked with the operation of the check valve 9 because the pressure P2 in outlet 14 drops. The check valve 9 and the shut valve 8 both are held in the valve-closed states (Fig. 2) No refrigerant flows from the upstream side of the outflow prevention device 5 into the evaporator 6.

In the case of a rupture of the evaporator 6, the reduction of the refrigerant pressure is sensed e.g. by a pressure sensor arranged on the evaporator 6 side. Then the operation of the refrigeration cycle is stopped. However, even if the compressor 1 continues to operate, a certain flow of refrigerant is allowed by the outflow prevention device 5 to prevent the pressure within the refrigeration cycle from becoming abnormally high.

When the shut valve 8 is closed, the bleed hole 24 in the piston 22 is located in the chamber 22b communicating with the shut valve inlet 13. This opens a passage, allowing refrigerant supplied from the expansion device 4 to flow from the shut valve inlet 13 into the chamber 22a behind the piston 22 via the bleed hole 24 and via the bypass passage 35 into the chamber downstream of the check valve 9.

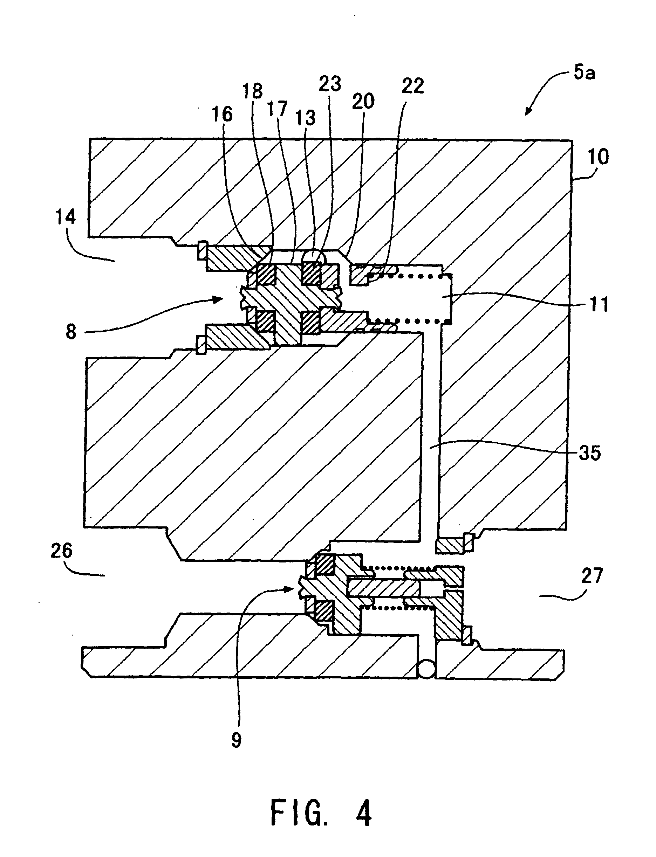

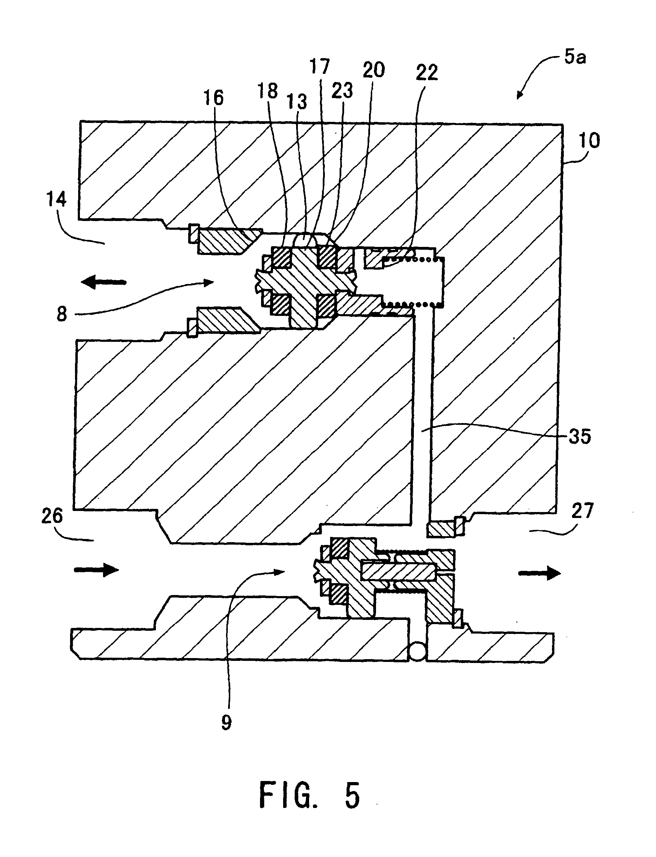

In the second embodiment of the outflow prevention device 5a of Figs. 4 and 5, the upper passage 11 formed in a body 10 for the shut valve 8 does not extend through the body 10. The valve seat 16 for the valve sheet 18 of plug 17 is formed by a component part separate from the body 10 and fitted in the upper passage 11. The valve seat 20 for the valve sheet 23 here is integrally formed with the body 10. The valve sheet 18 has the same diameter as that of a piston 22, and a closed-state pressure-receiving area of the shut valve 8 and a piston pressure-receiving area of the same are set to be equal to each other. However, the valve sheet 23 has a larger diameter than that of the valve sheet 18 so as to be seated on a tapered portion of the valve seat 20, i.e. to have a large seal diameter. The check valve 9 is similar to that of the first embodiment. The operation is similar to that of the first embodiment.

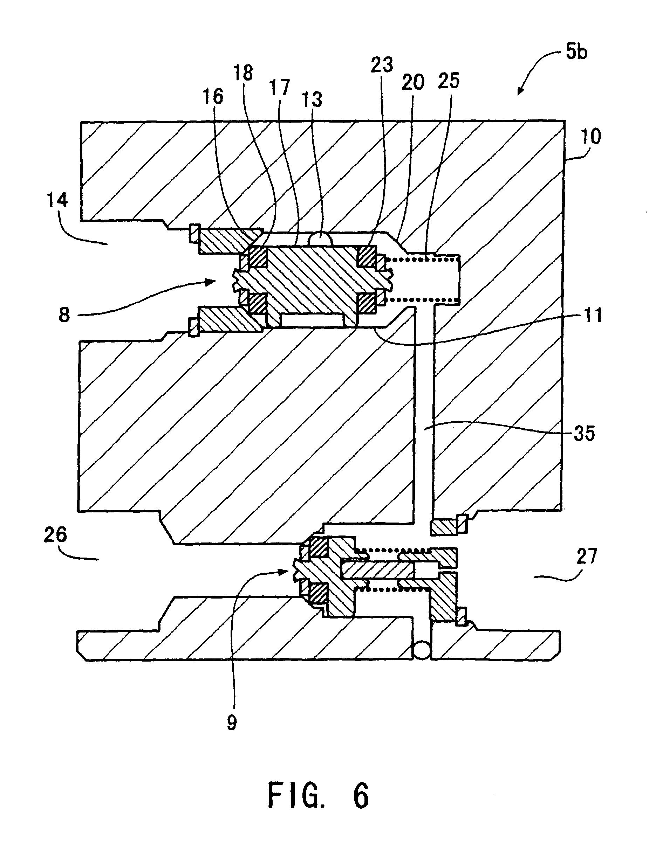

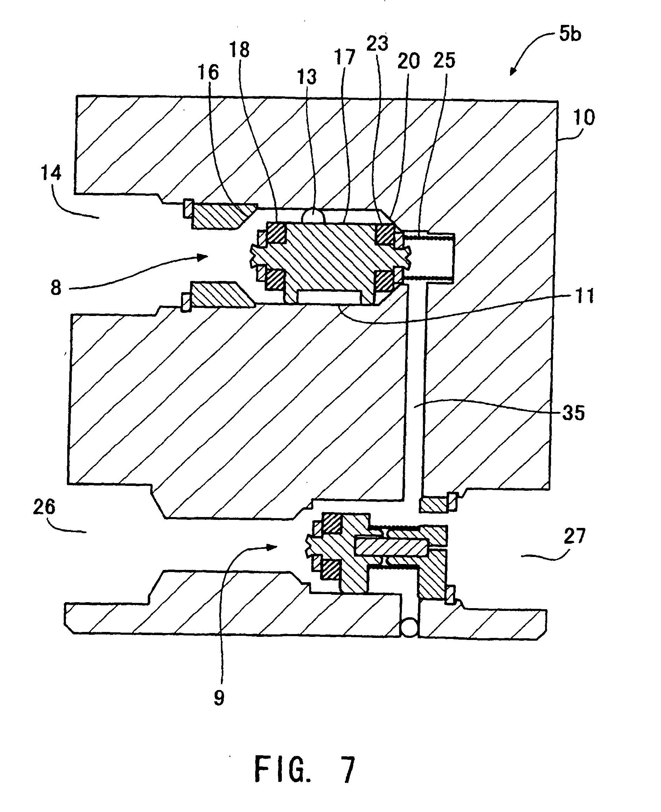

The outflow prevention device 5b of the third embodiment in Figs. 6 and 7 differs from the first and second embodiments in that the shut valve 8 is constructed as a simple three-way valve without piston. The shut valve 8 comprises the plug 17 with equally spaced valve sheets 17, 23 in a chamber defined within the upper passage 11 bored in the body 10 and into which opens the valve inlet 13. A member fitted in the upper passage 11 forms the valve seat 16. The second valve seat 20 is integrally formed with the body. In a chamber downstream of the valve seat 20, a spring 25 urges the plug 17 in a direction to seat the valve sheet 18 on the valve seat 16. The check valve 9 is similar to those of the first and second embodiments. The operation is similar to that of the first and second embodiments.

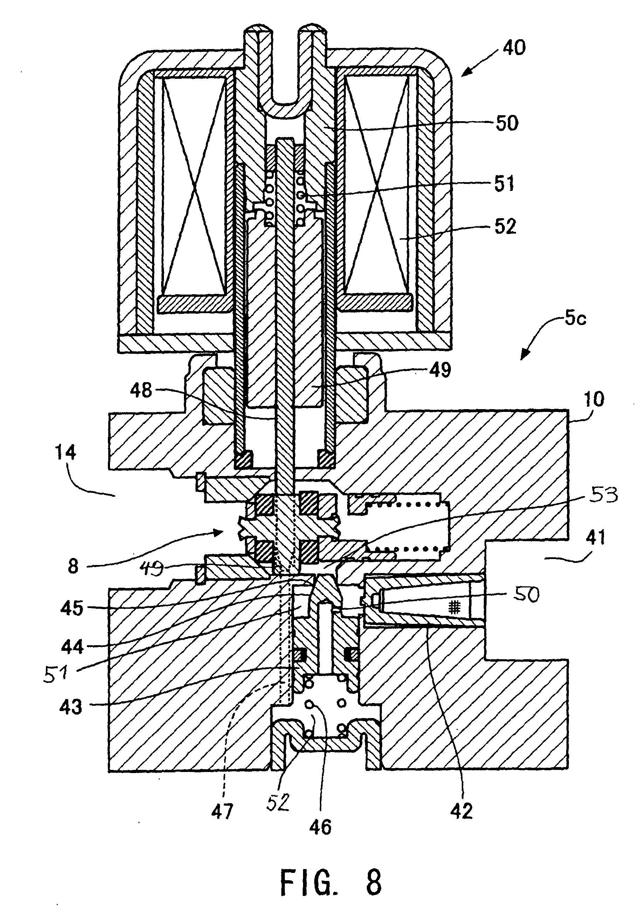

The fourth embodiment of the outflow prevention device 5c in Fig. 8 is a unitary assembly formed by structurally combining the outflow prevention device 5a according to the second embodiment and the expansion device 4. The check valve 9 is not shown in Fig. 8, because it e.g. may be arranged at a location in front of the drawing plane.

In Fig. 8, a main valve 43, 44, 45 for performing the expanding operation and a pilot valve 48, 49 for controlling the valve lift of the main valve are incorporated in the body 10. A solenoid 40 for controlling the valve lift of the pilot valve is arranged above the body 10.

The body 10 is formed with an expansion device inlet 41 communicating with the upstream side of the main valve 43, 44 via a strainer 42. The main valve comprises a main valve element 44 integrally formed with a piston 43 and a main valve seat 45 integrally formed with the body 10. The main valve element 44 is urged by a spring 46 in valve-closing direction. The piston 43 is formed with a restricted passage 50 for communicating respective chambers 51, 52 before and behind the piston 43. Refrigerant supplied to the upstream side of the main valve is allowed to leak in a minute amount via the restricted passage into the chamber 52.

The chamber 52 is in communication via a pilot passage 47 with a chamber 53 downstream of the main valve, i.e. the chamber 53 in which the shut valve 8 is received. An open end of the pilot passage 47 forms a pilot valve seat 49. A pilot valve element is arranged in a manner opposed to the pilot valve seat 49. The pilot valve element is integral with a shaft 48 of the solenoid 40. A plunger 49 is fixed to the shaft 48 and urged by a spring 51 in a direction away from a core 50, i.e. in the direction causing the pilot valve to be closed. A solenoid coil 52 is wound around the plunger 49 and the core 50.

When the solenoid coil 52 is not energised, and no refrigerant is introduced into the expansion device inlet 41, the main valve is closed by the spring 46. The pilot valve 48, 49 is also closed by the spring 51 contained in the solenoid 40.

When high-pressure refrigerant is introduced into the expansion device inlet 41 and into the chamber 53, the refrigerant is introduced into the chamber 52 via the restricted passage 50 in the piston 43, and further supplied to the pilot valve via the pilot passage 47 formed in the body 10. When the differential pressure across the pilot valve 48, 49 exceeds a value determined by a load of the spring 51 of the solenoid 40, the refrigerant pushes the pilot valve element 48 open and flows into the chamber 53 to the shut valve 8. The pressure in the chamber 52 becomes low, and the piston 43 moves downward. The main valve element 44 moves away from the main valve seat 45 to open the main valve.
Consequently, the refrigerant is allowed to pass through the open main valve and flow into the chamber 53 to the shut valve 8. The refrigerant is adiabatically expanded while passing through the main valve, to become a low-temperature and low-pressure refrigerant. At this time, refrigerant from the evaporator 6 is flowing through the check valve 9 due to suction of the compressor 1, and the differential pressure generated across the check valve 9 also holds the shut valve 8 open, so that the refrigerant supplied via the main valve passes through the shut valve 8 and flows into the evaporator 6.

When the refrigerant pressure in the chamber 51 is lowered due to outflow into the chamber 53, the pressure on the pilot valve is also reduced. The pilot valve element 48 moves in valve-closing direction. This increases the pressure in the chamber 52, so that the piston 43 moves upward, whereby the main valve element 44 is urged in the valve-closing direction. Consequently, the main valve more strongly restricts the flow rate to increase the refrigerant pressure on the upstream side of the main valve. The operations are repeatedly carried out, whereby the differential pressure across the main valve is controlled to a constant level.

When the solenoid coil 52 is energised, the plunger 49 is attracted toward the core 50. The force of the spring 51 decreases. This reduces the differential pressure set to the pilot valve. When the value of current energising the solenoid coil 52 is increased, the force of attracting the plunger 49 to the core 50 increases, which makes it possible to set the differential pressure of the pilot valve, i.e. the differential pressure across the differential pressure regulating valve to a further smaller value.

When the pressure on the evaporator 6 side of the expansion device-integrated outflow prevention device 5c becomes abnormally low due to rupture of the evaporator 6, the check valve 9 senses the decrease in the pressure and closes. The resulting differential pressure across the check valve 9 causes the shut valve 8 to close to thereby prevent refrigerant from flowing out, e.g. to the evaporator 6.

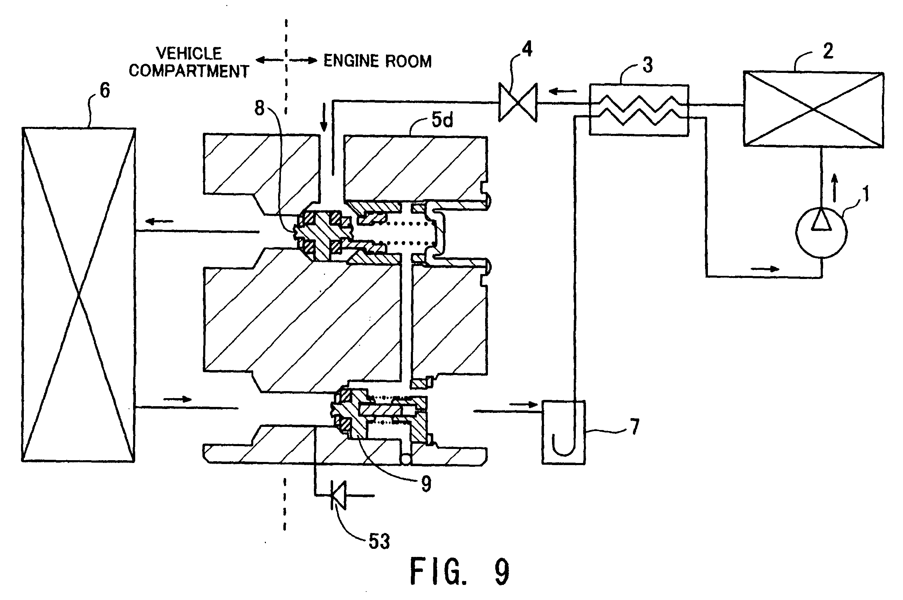

The fifth embodiment of the outflow prevention device 5d in Fig. 9 has a charge valve 53 arranged at a location upstream of the check valve 9. The charge valve 53 is used for charging the system with refrigerant. After the outflow prevention device is integrated into the system, or when the amount of refrigerant within the system becomes short, refrigerant is charged into the system via the charge valve 53.

Conventionally, such a charging valve generally is provided in the accumulator 7. However, when the outflow prevention device 5d is integrated into the system, if the valve for charging refrigerant is arranged not in the outflow prevention device 5d but in the accumulator 7, pressure becomes high on the downstream side of a check valve 9 during charging of refrigerant. As a result, the check valve 9 is closed, and a shut valve 8 is also closed in a manner interlocked therewith, which makes it impossible to fill the evaporator 6 with refrigerant.

Consequently, when refrigerant is charged via the charge valve 53 arranged upstream of the check valve 9, the charged refrigerant pushes the check valve 9 open to flow toward the accumulator 7. Since the shut valve 8 is opened simultaneously therewith, the charged refrigerant also flows toward the high-pressure side of the outflow prevention device 5d, whereby the whole system is filled with refrigerant.

It should be noted that although in the present embodiment the charge valve 53 is arranged upstream of the check valve 9, it alternatively may be arranged downstream of the shut valve 8.

## Claims

1. An outflow prevention device for preventing outflow of fluid flowing through a heat exchanger due to breakage of the heat exchanger (6), comprising
a check valve (9) arranged on a fluid outlet side of the heat exchanger (6), for allowing the fluid to flow only in a direction in which the fluid flows out from the heat exchanger, and
a shut valve (8) arranged on a fluid inlet side of the heat exchanger (6), for opening and closing in a pressurewise interlocked manner with opening and closing operations of said check valve, to thereby control flow of the fluid flowing into the heat exchanger (6),
said shut valve (8) having a valve seat (16) formed in an intermediate portion of a passage via which introduced fluid is guided out, and a valve element (17) arranged in a manner opposed to said valve seat from an upstream side such that said valve element can move to and away from said valve seat
**characterised in that**
a piston (22) is fixed to said valve element (17), and that a chamber (22a) on an opposite side of said piston (22) to said valve element (17) and a chamber (12) on a downstream side of said check valve (9) are in fluid communication with each other whereby pressures before and behind said check valve (9) are applied to said valve element (17) and said piston (22), respectively.

2. Device according to claim 1,
**characterised in that** said shut valve (8) and said check valve (9) are arranged within one integral body (10).

3. Device according to claim 1,
**characterised in that**
said valve element (17) has the same sealing diameter as a diameter of said piston (22).

4. Device according to claim 1,
**characterised in that**
said valve element (17) is formed with a sealing member (18) of a pliant material.

5. Device according to claim 1,
**characterised in that**
said piston (22) has a communication passage (24) for communicating chambers (22a, 22b) before and behind said piston (22) with each other.

6. Device according to claim 5,
**characterised in that**
said shut valve (8) comprises a second valve element (23) for closing said communication passage (24) when said shut valve (8) is open; and **in that** said second valve element (23) is preferably formed by a sealing member of a pliant material.

7. Device according to claim 1,
**characterised in that**
said shut valve (8) has a second valve seat (20) formed between a chamber (22b) into which fluid is introduced and a chamber (22a) communicating with the downstream side of said check valve (9), and a second valve element (23) arranged in a manner opposed to said second valve seat (20) from an upstream side such that said second valve element (23) can move, in unison with said valve element (17), to and away from said second valve seat (20), and that pressures (P2, P3) upstream and downstream of said check valve (9) are applied to said first and second valve elements (17, 23), respectively.

8. Device according to claim 7,
**characterised in that**
said first and second valve elements (17, 23) have the same diameter; and **in that** said first and second valve elements have sealing members made of a pliant material.

9. Device according to at least one of the preceding claims,
**characterised in that**
a valve-opening differential pressure set point at which said shut valve (8) starts to open is set to be equal to or smaller than a valve-opening differential pressure set point for said check valve (9).

10. Device according to claim 1,
**characterised in that**
an expansion device (43, 44, 45, 48, 49) for throttling and expanding liquid is integrally formed with the outflow prevention device.

11. Device according to claim 1,
**characterised in that**
a charge valve (53) for charging fluid is integrally formed with the outflow prevention device either on a downstream side of said shut valve (8) or on an upstream side of said check valve (9).

12. Refrigeration cycle, in particular an automotive air conditioner, comprising a heat exchanger (6) connected via an inlet passage (13, 14), and an outlet passage (26, 27) to the discharge and suction side of a refrigerant compressor (1) **characterised in that** an outflow prevention device (5, 5a, 5b, 5c) according to one of the preceding claims is structurally associated with said heat exchanger (6).

13. Refrigeration cycle according to claim 12,
**characterised in that**
said shut valve (8) comprises first and second interconnected valve elements (17, 23) arranged between a first valve seat (16) upstream of the heat exchanger (6) in an inlet passage (13, 14) to said heat exchanger (16) and a second valve seat (20) between the inlet passage (13, 14) and a shut valve actuating chamber (22a) which communicates via a pressure transferring connection bypass passage (35) with the downstream side of said check valve (9).

## Patentansprüche

1. Eine Ausström-Verhinderungs-Vorrichtung zum Verhindern des Ausströmens von Fluid, das durch einen Wärmetauscher strömt, als Folge eines Bruches des Wärmetauschers (6), mit
einem an einer Fluidauslassseite des Wärmetauschers (6) angeordneten Rückschlagventil (9), das es dem Fluid gestattet, nur in einer Richtung zu strömen, in welcher das Fluid aus dem Wärmetauscher herausströmt, und
einem an einer Fluideinlassseite des Wärmetauschers (6) angeordneten Absperrventil (8), das in einer in Bezug auf den Druck gekoppelten Weise mit den Öffnungs- und Schließ-Operationen des Rückschlagventils öffnet und schließt, um dadurch den Strom des Fluids zu steuern, das in den Wärmetauscher (6) strömt,
wobei das Absperrventil (8) einen Ventilsitz (16) aufweist, der in einem Zwischenabschnitt einer Passage ausgebildet ist, durch welche eingeführtes Fluid nach außen geführt wird, und ein Ventilelement (17), das dem Ventilsitz von einer Stromaufseite gegenüberliegt, derart, dass das Ventilelement sich zu dem Ventilsitz hin und von diesem weg bewegen kann,
**dadurch gekennzeichnet, dass**
an dem Ventilelement (17) ein Kolben (22) fixiert ist, und dass eine Kammer (22a) an einer gegenüberliegenden Seite des Kolbens (22) bezüglich des Ventilelementes (17) und eine Kammer (12) an einer Stromabseite des Rückschlagventils (9) miteinander in Fluidkommunikation stehen, so dass die Drücke vor und hinter dem Rückschlagventil (9) jeweils auf das Ventilelement (17) und den Kolben (22) aufgebracht werden.

2. Vorrichtung nach Anspruch 1,
**dadurch gekennzeichnet, dass** das Absperrventil (8) und das Rückschlagventil (9) innerhalb eines integralen Körpers (10) angeordnet sind.

3. Vorrichtung nach Anspruch 1,
**dadurch gekennzeichnet, dass** das Ventilelement (17) denselben Dichtdurchmesser hat wie ein Durchmesser des Kolbens (22).

4. Vorrichtung nach Anspruch 1,
**dadurch gekennzeichnet, dass** das Ventilelement (17) mit einem Dichtungsglied (18) aus einem flexiblen Material ausgebildet ist.

5. Vorrichtung nach Anspruch 1,
**dadurch gekennzeichnet, dass** der Kolben (22) eine Verbindungspassage (24) aufweist zum Verbinden von Kammern (22a, 22b) vor und hinter dem Kolben (22) miteinander.

6. Vorrichtung nach Anspruch 5,
**dadurch gekennzeichnet, dass** das Absperrventil 8 ein zweites Ventilelement (23) aufweist zum Schließen der Verbindungspassage (24), sobald das Absperrventil (8) offen ist, und dass das zweite Ventilelement (23), vorzugsweise, geformt wird durch ein Dichtglied aus flexiblem Material.

7. Vorrichtung nach Anspruch 1,
**dadurch gekennzeichnet, dass** das Absperrventil (8) einen zweiten Ventilsitz (20) aufweist, der zwischen einer Kammer (22b), in welche Fluid eingeführt wird, und einer Kammer (22a) ausgebildet ist, die mit der Stromabseite des Rückschlagventils (9) kommuniziert, und dass ein zweites Ventilelement (23) derart von einer Stromaufseite gegenüberliegend zum dem zweiten Ventilsitz (20) vorgesehen ist, dass sich das zweite Ventilelement (23) zusammen mit dem Ventilelement (17) bewegen kann zu dem zweiten Ventilsitz (20) und von diesem weg, und dass Drücke (P2, P3) stromauf und stromab des Rückschlagventils (9) jeweils auf die ersten und zweiten Ventilelemente (17, 23) ausgeübt werden.

8. Vorrichtung nach Anspruch 7,
**dadurch gekennzeichnet, dass** die ersten und zweiten Ventilelemente (17, 23) denselben Durchmesser aufweisen, und dass die ersten und zweiten Ventilelemente Dichtglieder aufweisen, die aus einem flexiblen Material hergestellt sind.

9. Vorrichtung nach wenigstens einem der vorhergehenden Ansprüche,
**dadurch gekennzeichnet, dass** ein Ventilöffnungs-Differentialdruck-Setzpunkt, bei welchem das Absperrventil (8) zu öffnen beginnt, so eingestellt ist, dass er gleich oder geringer ist als der Ventilöffnungs-Differentialdruck-Setzpunkt für das Rückschlagventil (9).

10. Vorrichtung nach Anspruch 1,
**dadurch gekennzeichnet, dass** eine Expansionsvorrichtung (43, 44, 45, 48, 49) zum Abdrosseln und Expandieren einer Flüssigkeit integral mit der Ausström-Verhinderungs-Vorrichtung geformt ist.

11. Vorrichtung nach Anspruch 1,
**dadurch gekennzeichnet, dass** entweder an einer Stromabseite des Absperrventils (8) oder an einer Stromaufseite des Rückschlagventils (9)ein Ladeventil (53) zum Einfüllen von Fluid integral mit der Ausström-Verhinderungs-Vorrichtung ausgebildet ist.

12. Kühlkreis, insbesondere für eine Automobil-Klimaanlage, mit einem Wärmetauscher (6), der über eine Einlasspassage (13, 14) und eine Auslasspassage (26, 27) jeweils an die Druck- und Saug-Seiten eines Kältemittelkompressors (1) angeschlossen ist,
**dadurch gekennzeichnet, dass** dem Wärmetauscher (6) eine Ausström-Verhinderungs-Vorrichtung (5, 5a, 5b, 5c) entsprechend einem der vorhergehenden Ansprüche strukturell zugeordnet ist.

13. Kühlkreis gemäß Anspruch 12,
**dadurch gekennzeichnet, dass** das Absperrventil (8) erste und zweite, miteinander verbundene Ventilelemente (17, 23) aufweist, die zwischen einem ersten Ventilsitz (16) stromauf des Wärmetauschers (6) in einer Einlasspassage (13, 14) zu dem Wärmetauscher (16) und einem zweiten Ventilsitz (20) zwischen der Einlasspassage (13, 14) und einer Absperrventil-Betätigungskammer (22a) angeordnet sind, welche über eine druckübertragende Verbindungs-Beipasspassage (35) mit der Stromabseite des Rückschlagventils (9) in Verbindung ist.

## Revendications

1. Dispositif de prévention de fuite destiné à prévenir une fuite de fluide s'écoulant au travers d'un échangeur de chaleur en raison d'une rupture de l'échangeur de chaleur (6), comprenant :
un clapet anti-retour (9) aménagé sur un côté de sortie de fluide de l'échangeur de chaleur (6), destiné à permettre l'écoulement du fluide uniquement dans une direction dans laquelle le fluide s'écoule hors de l'échangeur de chaleur ; et
un clapet d'arrêt (8) aménagé sur un côté d'admission de fluide de l'échangeur de chaleur (6), afin d'ouvrir et de fermer par verrouillage par pression des opérations d'ouverture et de fermeture dudit clapet anti-retour, afin de commander l'écoulement du fluide qui s'écoule à l'intérieur de l'échangeur de chaleur (6) ;
ledit clapet d'arrêt (8) comprenant un siège de clapet (16) formé dans une partie intermédiaire d'un passage par l'intermédiaire duquel du fluide introduit est guidé vers l'extérieur, et un élément de clapet (17) aménagé de manière opposée audit siège de clapet à partir d'un côté amont, de sorte que ledit élément de clapet peut se déplacer vers ledit siège de clapet et s'éloigner de celui-ci,
**caractérisé en ce que**
un piston (22) est fixé sur ledit élément de clapet (17), et **en ce qu'**une chambre (22a) située sur un côté dudit piston (22) opposé audit élément de clapet (17) et une chambre (12) située sur un côté aval dudit clapet anti-retour (9) sont en communication par fluide l'une avec l'autre, ce qui permet d'appliquer des pressions existant à l'avant et à l'arrière dudit clapet anti-retour (9) respectivement sur ledit élément de clapet (17) et sur ledit piston (22).

2. Dispositif selon la revendication 1, **caractérisé en ce que** ledit clapet d'arrêt (8) et ledit clapet anti-retour (9) sont aménagés à l'intérieur d'un corps monobloc (10).

3. Dispositif selon la revendication 1, **caractérisé en ce que** ledit élément de clapet (17) a le même diamètre d'étanchéité qu'un diamètre dudit piston (22).

4. Dispositif selon la revendication 1, **caractérisé en ce que** ledit élément de clapet (17) est formé avec un élément d'étanchéité (18) fabriqué dans un matériau souple.

5. Dispositif selon la revendication 1, **caractérisé en ce que** ledit piston (22) comprend un passage de communication (24) destiné à mettre en communication l'une avec l'autre des chambres (22a, 22b) situées à l'avant et à l'arrière dudit piston (22).

6. Dispositif selon la revendication 5, **caractérisé en ce que** ledit clapet d'arrêt (8) comprend un second élément de clapet (23) destiné à fermer ledit passage de communication (24) lorsque ledit clapet d'arrêt (8) est ouvert ; et **en ce que** ledit second élément de clapet (23) est formé de préférence au moyen d'un élément d'étanchéité fabriqué dans un matériau souple.

7. Dispositif selon la revendication 1, **caractérisé en ce que** ledit clapet d'arrêt (8) comprend un second siège de clapet (20) formé entre une chambre (22b) à l'intérieur de laquelle du fluide est introduit et une chambre (22a) en communication avec le côté aval dudit clapet anti-retour (9), et un second élément de clapet (23) aménagé de manière opposée audit second siège de clapet (20) un côté amont, de telle sorte que ledit second élément de clapet (23) peut, à l'unisson avec ledit élément de clapet (17), se déplacer vers ledit second siège de clapet (20) et s'éloigner de celui-ci, et **en ce que** des pressions (P2, P3) en amont et en aval dudit clapet anti-retour (9) sont appliquées respectivement sur lesdits premier et second éléments de clapet (17, 23).

8. Dispositif selon la revendication 7, **caractérisé en ce que** lesdits premier et second éléments de clapet (17, 23) ont le même diamètre ; et **en ce que** lesdits premier et second éléments de clapet comprennent des éléments d'étanchéité fabriqués dans un matériau souple.

9. Dispositif selon au moins l'une des revendications précédentes, **caractérisé en ce que** le point de réglage de pression différentielle d'ouverture de clapet auquel ledit clapet d'arrêt (8) commence à s'ouvrir est réglé de manière à être égal ou inférieur à un point de réglage de pression différentielle d'ouverture de clapet dudit clapet anti-retour (9).

10. Dispositif selon la revendication 1, **caractérisé en ce qu'**un dispositif de détente (43, 44, 45, 48, 49) destiné à étrangler et à détendre un liquide est d'un bloc formé avec le dispositif de prévention de fuite

11. Dispositif selon la revendication 1, **caractérisé en ce qu'**un clapet de charge (53) destiné à charger un fluide est d'un bloc formé avec le dispositif de prévention de fuite, soit sur un côté aval dudit clapet d'arrêt (8), soit sur un côté amont dudit clapet anti-retour (9).

12. Cycle de réfrigération, destiné en particulier à un climatiseur pour automobile, comprenant un échangeur de chaleur (6) connecté par l'intermédiaire d'un passage d'admission (13, 14) et d'un passage d'évacuation (26, 27) au côté de décharge et d'aspiration d'un compresseur de réfrigération (1), **caractérisé en ce qu'**un dispositif de prévention de fuite (5, 5a, 5b, 5c) selon l'une quelconque des revendications précédentes est structurellement associé audit échangeur de chaleur (6).

13. Cycle de réfrigération selon la revendication 12, **caractérisé en ce que** ledit clapet d'arrêt (8) comprend un premier et un second élément de clapet en interconnexion (17, 23) aménagés entre un premier siège de clapet (16) situé en amont de l'échangeur de chaleur (6) dans un passage d'admission (13, 14) dudit échangeur de chaleur (6), et un second siège de clapet (20) situé entre le passage d'admission (13, 14) et une chambre de commande de clapet d'arrêt (22a) qui est en communication, par l'intermédiaire d'un passage en dérivation de connexion de transfert de pression (35), avec le côté aval dudit clapet anti-retour (9).
